## Europäisches Patentamt
## European Patent Office
## Office européen des brevets

(19)

(11) Numéro de publication: **0 073 287**
**B1**

(12) **FASCICULE DE BREVET EUROPEEN**

(45) Date de publication du fascicule du brevet: **29.01.86**

(21) Numéro de dépôt: **81870033.8**

(22) Date de dépôt: **05.08.81**

(51) Int. Cl.⁴: **G 21 C 19/06**

(54) Dispositif d'emmagasinage de barres de combustibles nucléaires.

(43) Date de publication de la demande:
**09.03.83 Bulletin 83/10**

(45) Mention de la délivrance du brevet:
**29.01.86 Bulletin 86/05**

(84) Etats contractants désignés:
**AT BE CH DE FR GB IT LI LU NL SE**

(56) Documents cités:
**FR-A-2 384 326**
**FR-A-2 388 377**
**FR-A-2 462 765**
**FR-A-2 494 397**

(73) Titulaire: **ATELIERS DE CONSTRUCTIONS ELECTRIQUES DE CHARLEROI (ACEC) Société Anonyme**
**Avenue Lloyd George 7**
**B-1050 Bruxelles (BE)**

(72) Inventeur: **Simon, André**
**Rue de Wayaux**
**B-6208 Mellet (BE)**

Courier Press, Leamington Spa, England.

## Description

La présente invention a trait à un dispositif d'emmagasinage de barres combustibles nucléaires comprenant des rateliers reposant sur un ensemble de supports à pile de plateaun reparés elan de l'autre pardes faires de rouleaux.

En général, les râteliers de stockage de combustible nucléaire irradié reposent sur des appuis fixes, simplement disposés dans le fond ou attachés à des plaques d'ancrage. En cas de séisme, ces râteliers sont secoués transversalement et des tensions fort élevées apparaissent notamment aux jonctions des râteliers et de leurs supports mettant en péril la stabilité des râteliers. Pour favoriser le découplage entre les râteliers et leurs supports et réduire les efforts de battement des éléments de combustible lors d'un séisme, il existe des supports à rouleaux constitués chacun d'un empilage de plateaux séparés l'un de l'autre par des paires de rouleaux. Tel est le dispositif décrit dans la demande a le brevet FR—A—2 494 397 publicé le 21.05.1982 où chaque pile est composée de trois plateaux séparés par deux paires de rouleaux orientés dans des directions perpendiculaires pour permettre aux râteliers d'exécuter des mouvements horizontaux amortissant les effets du séisme.

Pour vérifier le bon fonctionnement de ces supports à plateaux on doit procéder à des essais périodiques de mise en mouvement des râteliers. Cette opération permet de s'assurer qu'aucune dégradation telle que formation d'empreintes, accumulation de dépôts, présence d'objets étrangers sur les pistes n'entrave le mouvement des rouleaux et n'empêche les supports de remplir efficacement leur rôle en cas de séisme. Lors de ces vérification périodiques, il faut réaliser un déplacement simultané de tous les râteliers de stockage en utilisant des mécanismes de mise en mouvement disposés de manière à éviter tout coïncement de l'un des râteliers. En effet, ce coïncement entraînerait non seulement la déformation permanente de certains composants mais fausserait entièrement le système de repérage des cellules constitutives de rêteliers, généralement effectué selon deux axes de coordonnées à quelques millimètres prés.

Une façon plus simple de réaliser ces vérifications périodiques pourrait utiliser des mécanismes prenant appui sur les parois de la piscine. Toutefois ces opérations répétées risqueraient de détériorer progressivement les parois et de compromettre l'étanchéite de la piscine.

La présente invention remédie à cet inconvénient en prenant appui sur le support du râtelier lui-même. Le dispositif selon l'invention se caractérise en ce qu'au moins deux supports à plateaux sont équipés d'un mécanisme de déplacement volontaire dont l'action et la réaction s'exercant sur deux plateaux différents de la pile de plateaux. Le déplacement volontaire des rouleaux est obtenu en exerçant, à l'aide de mécanisme appropriés, des efforts sur deux plateaux différents d'une même pile. Dans le cas de support à rouleaux, le déplacement de l'ensemble est réalisé successivement dans deux directions perpendiculaires à l'aide de mécanismes installés sur la plupart des supports situés à la périphérie de l'ensemble des râteliers, communément appelés supports périphériques.

Cette mise en mouvement se fait grâce à l'adjonction de pièces fixes sur le plateau inférieur et l'adjonction de pièces amovibles fixées au plateau intermédiaire ou au plateau supérieur selon la direction du déplacement souhaité. A noter que dans certains cas, les supports de coins peuvent être démunis de mécanisme de mise en mouvement.

L'invention est exposée en détail à l'aide des figures suivantes.

La figure 1 représente une vue d'ensemble d'une piscine comportant douze râteliers.

La figure 2 montre un dispositif à secteur denté adapté au déplacement du plateau intermédiaire par rapport au plateau inférieur de base.

La figure 3 montre un dispositif à pignons pour déplacer le plateau supérieur par rapport au plateau de base.

La figure 4 montre une variante du même dispositif adaptable aux deux directions de déplacement.

La figure 5 montre une vue en élévation de deux râteliers posés sur un support d'appui à rouleaux.

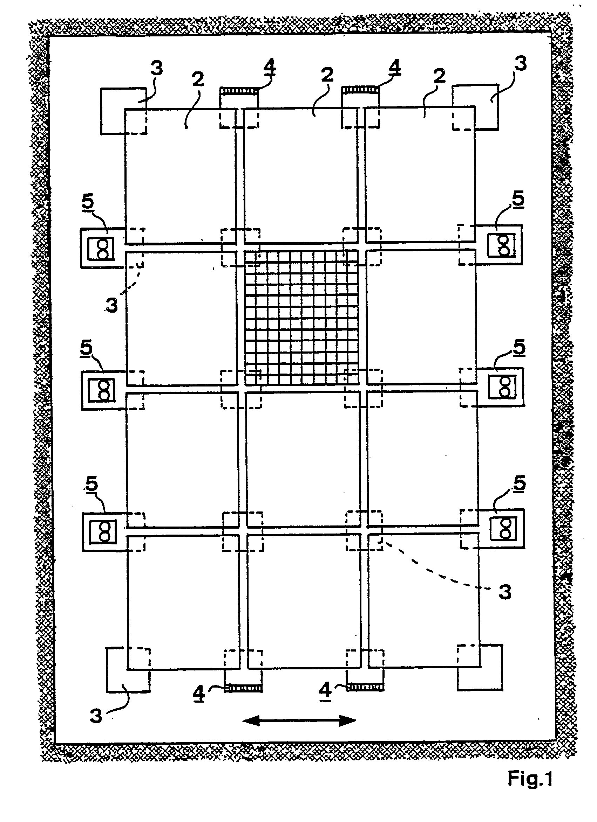

La figure 1 représente une vue un plan d'une piscine 1 dans laquelle sont immergés douze râteliers 2 d'emmagasinage de barres de combustible nucléaire irradié qui reposent sur vingt supports 3 à rouleaux.

A l'exception des support situés aux quatre coins de la piscine 1, tous les autres supports périphériques sont équipés de mécanismes destinés à mettre en mouvement l'ensemble des râteliers 2.

Dans l'exemple de réalisation repris en figure 1, deux types de mécanismes différentes sont utilisés pour effectuer cette manoeuvre.

Un premier type de mécanisme 4 est constitué d'un secteur denté engrenant dans une crémaillère. L-autre type de mécanisme 5 est constitué de deux pignons engrenés, actionnant chacun une crémaillère.

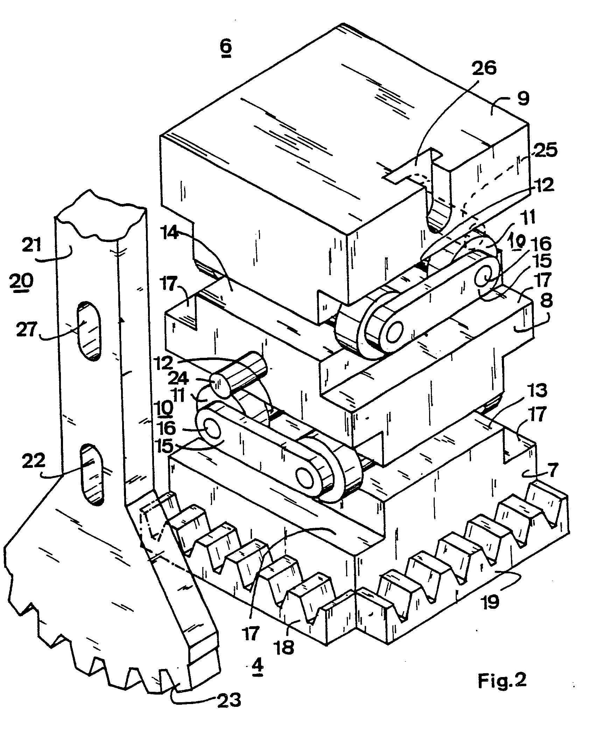

La figure 2 représente en perspective le mécanisme à secteur denté 4 et un support à plateaux 6.

Le support 6 est constitué d'un plateau inférieur 7, d'un plateau intermédiaire 8 et d'un plateu supérieur 9. Entre ces plateaux sont disposés deux paires 10 de rouleaux 12, orientée chacune perpendiculairement l'une à l'autre. Chaque paire 10 de rouleaux 12 comporte des guides circulaires 11 placés à chaque bout des rouleaux 12 pour éviter un déplacement oblique sur des pistes 13 et 14 constituées respectivement par la face supérieure du plateau inférieur 7 et la face inférieure du plateau intermédiaire 8 d'une part, la face supérieure du plateau intermédiaire 8 et la face inférieure du plateau supérieur 9 d'autre part.

Les guides circulaires 11 sont maintenus à égale distance l'un de l'autre par des biellettes 15 fixées aux guides circulaires 11 par des vis 16.

Pour réduire l'encombrement latéral des supports *6*, des rainures 17 ont été pratiquées dans les plateaux pour permettre aux guides 11 et à leurs biellettes 15 de ne pas dépasser la dimension des plateaux.

Le mécanisme de déplacement *4* est constitué de deux crémaillères 18 et 19 solidarisées au plateau inférieur 7 est disposées, à la base du support *6*, dans des directions orthogonales. Un levier de commande *20* se compose d'un long manche 21, nanti d'un orifice 22 et terminé d'un secteur denté 23. Lorsqu'on accroche le levier de commande *20* au support *6* en introduisant l'orifice 22 sur un tenon 24 du plateau intermédiaire 8, le secteur denté 23 engrène avec la crémaillère 18. En agissant sur le manche 21, le roulement du secteur denté 23 sur la crémaillère 18 entraîne par l'intermédiaire du tenon 24 du plateau intermédiaire 8, la mise en mouvement des plateaux 8 et 9 et de la charge reprise par le support *6* grâce au déplacement de la paire *10* de rouleaux *12* sur la piste 13 du plateau inférieur 7 et du plateau intermédiaire 8.

La mise en mouvement du support *6* dans une direction perpendiculaire à la précédente est obtenu à l'aide d'une crémaillère 19 et d'un tenon rapporté 25 préalablement introduit dans l'encoche 26 prévue dans le plateau supérieur 9. Pour opérer cette mise en mouvement, on utilise alors un orifice 27 du levier de commande *20* qui, introduit sur le tenon 25, permet au secteur denté 23 de rouler sur la crémaillère 19 et ainsi de déplacer le plateau supérieur 9 et la charge reprise par le support *6* grâce à la rotation de la paire *10* de rouleaux *12* sur la piste 14 du plateau intermédiaire 8 et du plateau supérieur 9.

Il est à remarquer que la crémaillère présentée en figure 2 n'est utilisable que pour un support de coin, car pour tout autre support périphérique, le déplacement du levier de commande *20* accroché cette fois au tenon 25 serait limité dans sa course par les bords extérieurs des râteliers.

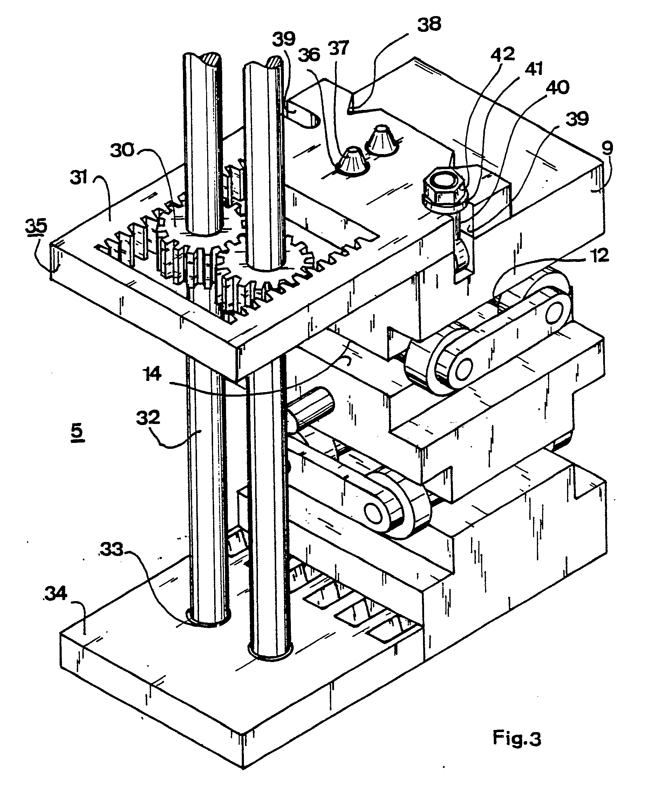

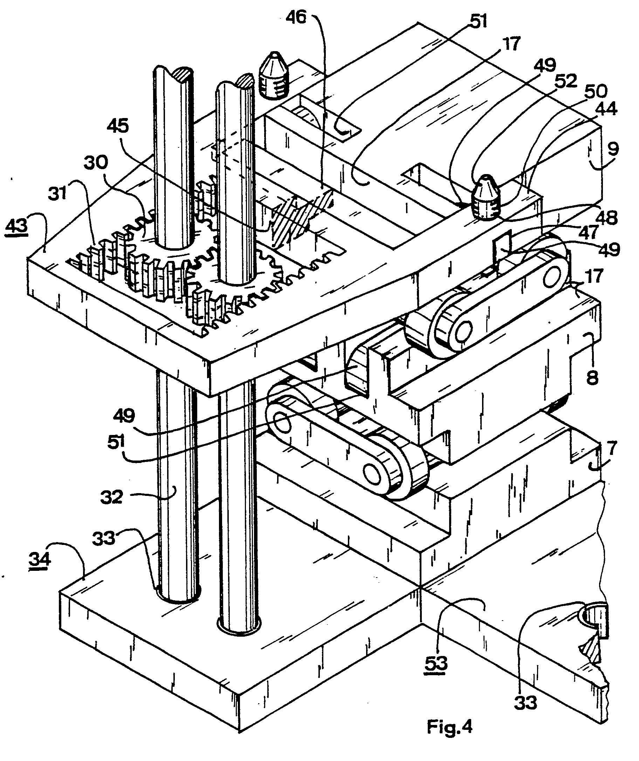

A la figure 3, le mécanisme de déplacements à pignons *5* est représenté en perspective. Ce mécanisme se compose de deux pignons 30 engrenés, en prise chacun avec une crémaillère 31. Chaque pignon 30 est solidarisé à un arbre 32 de grande longueur dont une extrémité tourne dans un coussinet 33 aménagé dans une plaque de fond *34* solidarisée au plateau inférieur 7 et dont l'autre extrémité, non représentée, es nantie d'un levier ou d'un volant sur lequel l'opérateur, installé sur un pont roulant par dessus la piscine 1 applique le couple désiré. Sur ce pont roulant sont disposés deux paires de demi-coussinets qui s'assemblent pour servir de guide à la partie supérieure des arbres 32.

Les crémaillères 31 disposées parallèlement l'une à l'autre et en vis-à-vis sont solidaires d'une plaque de manoeuvre *35* nantie de deux trous 36 servant à localiser la plaque *35* sur la plateau supérieur 9 au moyen de deux tenons 37

solidaires du plateau supérieur 9. La plaque de manoeuvre *35* porte également deux rainures 38 servant à la guider lors de sa descente le long du râtelier, ainsi que deux encoches 39 dans lesquelles des tiges filetées 40 peuvent s'y rabattre en pivotant sur leur base. Ces tiges filetées 40 portent chacune une rondelle 41 et un écrou 42 pour solidariser la plaque de manoeuvre *35* au plateau supérieur 9.

Pour opérer la mise en mouvement du plateau supérieur 9 et de sa charge, il suffit d'appliquer, à l'extrémité de chaque arbre 32, un couple convenablement orienté pour faire tourner les pignons 30 et faire défiler les crémaillères 31 de la plaque de manoeuvre 35. De la sorte les rouleaux *12* se déplacent sur les pistes 14 pour empêcher la formation d'empreintes ou d'accumulation de dépôts sur ces pistes.

Pour vérifier périodiquement l'ensemble des supports 5 par des mises an mouvement dans des directions orthogonales, l'opération peut se faire à l'aide des mécanismes à secteur denté *4* et à pignons *5*. Par exemple, dans le cas de la figure 1, les mécanismes *4* et *5* sont disposés pour opérer un déplacement de gauche à droite et de droite à gauche de l'ensemble des supports 6. Pour faire un déplacement dans la direction orthogonale c'est-à-dire d'avant en arrière, il suffit de permuter les mécanismes *4* et *5*.

A la figure 4, le même mécanisme à pignons *5* est adapté au déplacement du plateau supérieur 9 et du plateaux intermédiare 8, pour autant que la plateau supérieur 9 porte une rainure 17 sur la face avant.

Dans cet exemple de réalisation, une plaque de manoeuvre *43* comporte deux crémaillères 31 disposées parallèlement et en vis-à-vis et deux bras 44 s'appliquant de part et d'autre des faces latérales du plateau à déplacer.

La plaque de manoeuvre *43* porte également une saillie 45 sur sa face inférieure et une panne 46 située à l'avant de la branche réunissant les deux bras 44. La saillie 45 et la panne 46 présentent chacune une face qui se disposent l'une et l'autre selon un angle rentrant pour épouser respectivement la face horizontale de la rainure 17 et la face avant du plateau à déplacer, le plateau supérieur 9, et servir de surfaces d'appui de la plaque de manoeuvre *43* sur la plateau à déplacer. La partie inférieure de la saillie 45 est bisautée pour faciliter la pose de la plaque de manoeuvre *43* sur la plateau à déplacer.

En outre chaque bras 44 de la plaque de manoeuvre *43* porte une encoche 47 ouverte vers le bas et un trou 48, situé au droit de l'encoche 47 et débouchant vers le haut.

Dans cette encoche 47 s'engage une pièce d'ancrage 49, articulée à sa base, et portant une tige filetée 50 s'engageant dans le trou 48 du bras 44.

L'articulation située à la base de la pièce d'ancrage 49 permet à cette pièce d'ancrage 49 et à la tige filetée 50 qui lui est solidaire de s'escamoter complètement par rotation dans une fente 51 pratiquée de part et d'autre des faces latérales du plateau à déplacer et débouchant sur sa face supérieure. Pour faciliter la mise en place de la plaque de manoeuvre *43*, chaque tige filetée est terminée par un tronc de cône 52.

Ainsi constituée, la plaque de manoeuvre *43* peut également s'adapter au plateau intermédiaire 8. Il suffit pour cela de faire pivoter la pièce d'ancrage 49 pour les sortir des fentes 51 où elles sont abritées et de monter le mécanisme à pignons *5* sur l'autre plaque de fond *53*, disposée orthogonalement à la première et portant deux coussinets 33 destinés à recevoir les extrémités des arbres 32.

La plaque de manoeuvre *43* prend alors appui sur le plateau intermédiaire 8 en s'adossant à la face horizontale de la rainure 17 du plateau intermédiaire 8. L'ancrage de la plaque de manoeuvre *43* sur le plateau intermédiaire 8 se fait comme précédemment par l'introduction de pièces d'ancrage 49 dans les encoches 47 d'une part et des tiges filetées 50 dans les trous 48 d'autre part. La solidarisation de la plaque de manoeuvre *43* sur la plateau intermédiaire s'opère en vissant des écrous, non représentés, sur le tiges filetées 50.

En faisant pivoter les arbres 32 dans les coussinets 33, les pignons dentés 30 font défiler les crémaillères 31, forçant ainsi le plateau intermédiaire 8 à se déplacer par rapport au plateau inférieur 7.

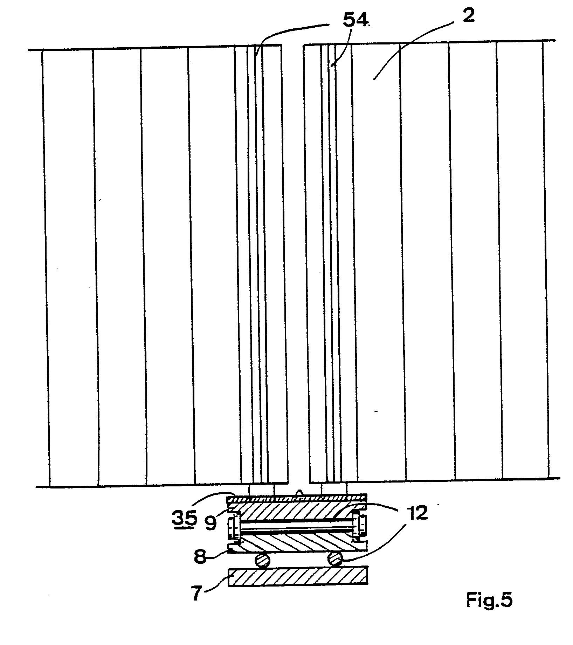

La figure 5 représente une vue partielle de deux râteliers 2 reposant sur un support à rouleaux *6*.

Dans cet exemple de réalisation, les rainures 38 de la plaque des manoeuvre *35* ont permis de descendre celle-ci en glissant le long des rails 54 solidaires des deux râteliers. La mise en place définitive de la plaque de manoeuvre *35* s'achève par l'introduction des tenons 37 du plateau supérieur 9 dans les trous 36 de la plaque de manoeuvre *35*.

**Revendications**

1. Dispositif d'emmagasinage de barres de combustible nucléaire comprenant des râteliers (2) reposant sur un ensemble de supports (3) à pile de plateaux (7, 8, 9) séparés l'un de l'autre par des paires (*10*) de rouleaux (12) caractérisé en ce qu'au moins deux supports à plateaux sont équipés d'un mécanisme de déplacement volontaire (*4*, *5*) dont l'action et la réaction s'exercent sur deux plateaux différents (8, 9) de la pile de plateaux.

2. Dispositif suivant la revendication 1, caractérisé en ce que le mécanisme de déplacement volontaire (*4*, *5*) installé sur la plupart des supports situés à la périphérie de l'ensemble des râteliers consiste en au moins un levier (*20*) engagé dans des organes de retenue solidaires (24, 25) de deux plateaux différents (8, 9) de la pile.

3. Dispositif selon une des revendications précédentes, caractérisé en ce que le mécanisme de déplacement volontaires (*4*, *5*) prend appui sur des éléments (18, 19; *34*, *35*) solidarisés à un plateau inférier (7) et agit sur un autre plateau par l'intermédiaire d'un système à crémaillère composé d'une une part d'au moins une crémaillère (18, 19; 31) solidaire d'un plateau (7), d'autre part d'au moins une pièce (23; 30) se déplaçant autour d'un axe (24; 32) solidaire d'un autre plateau (8, 9) et nantie de dents engrenant dans la cremaillère.

4. Dispositif selon la revendication 3, caractérisé en ce que le plateau inférieur (7) porte deux crémaillères (18 et 19) disposées orthogonalement en ce que les deux autres plateaux (8, 9) portent chacun un tenon (24, 25) sur une face latérale parallèle à chaque crémaillère (18, 19) et en ce que un levier de commande (*20*) nanti d'un secteur denté (23) engrenant avec une crémaillère (18 ou 19) porte au moins un orifice (22, 27) pour recevoir le tenon (24, 25).

5. Dispositif selon la revendication 3, caractérisé en ce que le plateau inférieur (7) est rendu solidaire d'une plaque de fond (*34*) portant deux coussinets (33) destinés à recevoir les extrémités de deux arbres (32) munis chacun d'un pignon (30) engrenant dans une crémaillère (31) solidaire d'une plaque de manoeuvre (*35*), en ce que la plaque de manoeuvre (*35*) porte deux trous (36) destinés à recevoir deux tenons (37) disposés sur la face horizontale supérieure du plateau supérieur (9), deux encoches latérales (39) destinées à articuler chacune une tige filetée (40), deux rainures (38) destinées à guider la plaque de manoeuvre (*35*) lors de sa descente le long du râtelier.

6. Dispositif selon la revendication 3, caractérisé en ce que la plateau inférieur (7) est rendu solidaire de deux plaques de fond (*34* et *53*) disposées orthogonalement et portant chacune deux coussinets (33) destinés à recevoir les extrémités de deux arbres (32) muni chacun d'un pignon (30) et engrenant chacun avec une crémaillère (31) solidaires toutes deux de la plaque de manoeuvre (*35*), en ce que la plaque de manoeuvre (35) porte deux bras (44) s'appliquant de part et d'autre des faces latérales du plateau à déplacer, en ce que chacun de ces bras (44) porte une encoche (47) ouverte vers le bas et dans laquelle s'engage une pièce d'ancrage (49) solidaire du plateau supérieur (9) à déplacer, un trou (48) pratiqué au droit de l'encoche (47) et destiné à recevoir une tige filetée (50) solidaire de la pièce d'ancrage (49).

7. Dispositif selon la revendication 4, caractérisé en ce qu'un tenon (25) est nanti à une extrémité d'un élargissement qui se glisse dans une encoche (26) pratiquée dans la face supérieure du plateau supérieur (9) à déplacer.

8. Dispositif selon la revendication 5, caractérisé en ce que les tiges filetées (40) pivotent à la base pour s'escamoter chacune dans une fente (39) pratiquée à la partie supérieure du plateau supérieur (9).

9. Dispositif selon la revendication 6, caractérisé en ce que la branche unissant les deux bras (44) porte une saillie (45) sur sa face inférieure partiellement ou totalement inclinée par rapport à la verticale et en ce que les tiges filetées (50) des pièces d'ancrage (49) sont surmontées d'un partie progressivement amincie pour faciliter la pose de la plaque de manoeuvre (43) sur la plateau à déplacer.

10. Dispositif selon les revendications 6 et 9, caractérisé en ce que les deux pièces d'ancrage (49) solidarisées aux deux tiges filetées (50) pivotent à la base pour s'escamoter dans une fente (51) faite à la partie supérieure du plateau à déplacer.

**Patentansprüche**

1. Vorrichtung zur Lagerung von Kernbrennstoffstäben, aus Ständern (2), die auf einer Gesamtheit von Stützen (3) aus einem Stapel von Platten (7, 8, 9) bestehen, die durch Rollenpaare (10) mit Rollen (12) voneinander getrennt sind, dadurch gekennzeichnet, daß mindestens zwei Plattenstützen mit einem Mechanismus zur freien Verschiebung (4, 5) ausgerüstet sind, dessen Wirkung und Gegenwirkung auf zwei verschiedene Platten (8, 9) des Plattenstapels ausgeübt werden.

2. Vorrichtung gemäß Anspruch 1, dadurch gekennzeichnet, daß der Mechanismus zur freien Verschiebung (4, 5), der bei den meisten der am Rande der Gesamtheit von Ständern gelegenen Stützen eingebaut ist, aus mindestens einem Hebel (20) besteht, der in Halteorgane (24, 25) eingesetzt ist, die mit zwei verschiedenen Platten (8, 9) des Stapels fest verbunden sind.

3. Vorrichtung gemäß einem der vorhergehenden Ansprüche, dadurch gekennzeichnet, daß der Mechanismus zur freien Verschiebung (4, 5) auf Elementen (18, 19; 34, 53) aufliegt, die mit einer unteren Platte (7) fest verbunden sind, und über ein Zahnstangensystem auf eine weitere Platte wirkt, wobei dieses Zahnstangensystem sich zusammensetzt aus einerseits mindestens einer Zahnstange (18, 19; 31), die mit einer Platte (7) fest verbunden ist, und andererseits aus mindestens einem Teil (23; 30), das um eine Achse (24; 32) drehbar ist, die mit einer weiterhin Platte (8, 9) fest verbunden ist, und das mit Zähnen versehen ist, die in die Zahnstange eingreifen.

4. Vorrichtung gemäß Anspruch 3, dadurch gekennzeichnet, daß die untere Platte (7) zwei senkrecht zueinander angeordnete Zahnstangen (18 und 19) aufweist, daß die zwei weiteren Platten (8, 9) auf einer zu jeder Zahnstange (18, 19) parallelen seitlichen Fläche je einen Zapfen (24, 25) aufweisen, und daß ein Steuerhebel (20), der mit einerm Zahnsegment (23) versehen ist, das in eine Zahnstange (18 oder 19) eingreift, mindestens eine Öffnung (22, 27) aufweist, um den Zapfen (24, 25) aufzunehmen.

5. Vorrichtung gemäß Anspruch 3, dadurch gekennzeichnet, daß die untere Platte (7) mit einer Grundplatte (34) fest verbunden ist, die zwei Lagerbuchsen (33) aufweist, die zur Aufnahme der Enden von zwei Wellen (32) bestimmt sind, von denen jede mit einem Ritzel (30) versehen ist, das in einer Zahnstange (31) eingreift, die mit einer Betätigungsplatte (35) fest verbunden ist, daß die Betätigungsplatte (35) versehen ist mit zwei Bohrungen (36), die zur Aufnahme von zwei Zapfen (37) bestimmt sind, die auf der oberen horizontalen Fläche der oberen Platte (9) angeordnet sind, und mit zwei seitlichen Einschnitten (39), von denen jeder zur gelenkigen Lagerung einer Gewindestange (40) bestimmt ist, sowie mit zwei Nuten (38), die zur Führung der Betätigungsplatte (35) bei ihrer Absenkung längs des Ständers bestimmt sind.

6. Vorrichtung gemäß Anspruch 3, dadurch gekennzeichnet, daß die untere Platte (7) mit zwei Grundplatten (34 und 53) fest verbunden ist, die senkrecht zueinander angeordnet sind, und von denen jede mit zwei Lagerbuchsen (33) versehen ist, die zur Aufnahme der Enden von zwei Wellen (32) bestimmt sind, von denen jede mit einem Ritzel (30) versehen ist, das in eine Zahnstange (31) eingreift, wobei beide Zahnstangen (31) mit der Betätigungsplatte (35) fest verbunden sind, daß die Betätigungsplatte (35) zwei Arme (44) aufweist, die zu beiden Seiten an den seitlichen Flächen der zu verschiedenen Platte anliegen, daß jeder dieser Arme (44) versehen ist mit einem nach unten offenen Einschnitt (47), in den ein Verankerungsteil (49) eingreift, das mit der zu verschiebenden oberen Platte (9) rest verbunden ist, und mit einer Bohrung (48), die bei dem Einschnitt (47) angebracht ist und zur Aufnahme einer mit dem Verankerungsteil (49) fest verbundenen Gewindestange (50) bestimmt ist.

7. Vorrichtung gemäß Anspruch 4, dadurch gekennzeichnet, daß ein Zapfen (25) an einem Ende mit einer Verbreiterung versehen ist, die in einen Einschnitt (26) eingeschoben wird, der in der oberen Fläche der zu verschiebenden oberen Platte (9) angebracht ist.

8. Vorrichtung gemäß Anspruch 5, dadurch gekennzeichnet, daß die Gewindestangen (40) um ihr unteres Ende schwenkbar sind, um jeweils in einem Schlitz (39) untergebracht zu werden, der in dem oberen Teil der oberen Platte (9) angebracht ist.

9. Vorrichtung gemäß Anspruch 6, dadurch gekennzeichnet, daß der Zweig, der die zwei Arme (44) miteinander verbindet, auf seiner unteren Fläche einen Vorsprung (45) aufweist, der bezüglich der Vertikalen teilweise oder ganz geneigt ist, und daß die Gewindestangen (50) der Verankerungsteile (49) an ihrem Ende einen zusehends dünner werdenden Abschnitt aufweisen, um die Anbringung der Betätigungsplatte (43) auf der zu verschiebenden Platte zu erleichtern.

10. Vorrichtung gemäß den Ansprüchen 6 und 9, dadurch gekennzeichnet, daß die zwei Verankerungsteile (49), die mit den zwei Gewindestangen (50) fest verbunden sind, um ihr unteres Ende schwenkbar sind, um in einem Schlitz (51) untergebracht zu werden, der in dem oberen Teil der zu verschiebenden Platte angebracht ist.

## Claims

1. Storage device for nuclear fuel rods, comprising racks (2) resting on a group of supports (3) constituted by a stack of plates (7, 8, 9) separated from one another by pairs (10) of rollers (12), characterised in that at least two plate-type supports are equipped with a voluntary displacement mechanism (4, 5) whose action and reaction have effect on two different plates (8, 9) of the stack of plates.

2. Device according to claim 1, characterised in that the voluntary displacement mechanism (4, 5) installed on most of the supports which are situated at the periphery of the group of racks consists of at least one lever (20) engaged in retaining elements (24, 25) integral with two different plates (8, 9) of the stack.

3. Device according to one of the preceding claims, characterised in that the voluntary displacement mechanism (4, 5) bears on elements (18, 19; 34, 53) connected fast to a lower plate (7) and it acts on another plate through the agency of a rack system comprising at least one rack (18, 19; 31) integral with a plate (7), on the one hand, and on the other hand at least one part (23; 30) adapted to move about a pivot (24; 32) integral with another plate (8, 9) and provided with teeth engaging in the rack.

4. Device according to claim 3, characterised in that the lower plate (7) comprises two racks (18 and 19) which are arranged at right angles, in that the two other plates (8, 9) each carry a stud (24, 25) on a lateral face parallel to each rack (18, 19) and in that a control lever (20) provided with a toothed sector (23) meshing with a rack (18 or 19) comprises at least one orifice (22, 27) for receiving the stud (24, 25).

5. Device according to claim 3, characterised in that the lower plate (7) is rendered fast with a base plate (34) comprising two bearings (33) intended for accommodating the ends of two shafts (32) each provided with a pinion (30) engaging in a rack (31) integral with a manoeuvring plate (35), in that the manoeuvring plate (35) comprises two holes (36) for accommodating two studs (37) arranged on the upper horizontal face of the upper plate (9), two lateral slots (39) intended each for articulation with a screw-threaded rod (40), two grooves (38) intended for guiding the manoeuvring plate (35) at its downward movement along the rack.

6. Device according to claim 3, characterised in that the lower plate (7) is rendered fast with two base plates (34 and 53) arranged at right angles and each comprising two bearings (33) intended for accommodating the ends of two shafts (32) each provided with a pinion (30) and each pinion engaging with a rack (31), both racks integral with the manoeuvring plate (35), in that the manoeuvring plate (35) comprises two arms (44) applied against the respective lateral faces of the plate to be displaced, in that each of the arms comprises a slot (47) which is downwardly open and into which engages an anchoring part (49) integral with the upper plate (9) to be displaced, and a hole (48) formed opposite the slot (47) and intended to receive a screwthreaded rod (50) integral with the anchoring part (49).

7. Device according to claim 4, characterised in that a stud (25) is provided at one end with a widened portion which slides in a slot (26) formed in the upper face of the upper plate (9) which is to be displaced.

8. Device according to claim 5, characterised in that the screwthreaded rods (40) pivot at the base for each retracting into a slot (39) formed at the upper portion of the upper plate (9).

9. Device according to claim 6, characterised in that the web connecting the two arms (44) comprises a projection (45) on its lower face, partly or fully inclined relatively to the vertical, and in that the screwthreaded rods (50) of the anchoring parts (49) are surmounted by a portion which narrows progressively so as to facilitate the placing of the manoeuvring plate (43) on the plate to be displaced.

10. Device according to claims 6 and 9, characterised in that the two anchoring parts (49) rendered fast with the two screwthreaded rods (50) pivot at the base for retracting into a slot (51) formed at the upper portion of the plate which is to be displaced. ·

Fig.1

Fig.2

Fig.3

**0 073 287**

**Fig.4**

Fig.5